# FASCICULE DE BREVET EUROPEEN

(11) **EP 0 710 040 B1**
(45) Date de publication et mention de la délivrance du brevet: **12.09.2001**
(21) Numéro de dépôt: 95420265.1
(22) Date de dépôt: 22.09.1995
(51) Int. Cl.: H04Q 1/14, H01R 13/703

(54) **Dispositif de coupure et de test pour ligne téléphonique**
Test und Trennanordnung für eine Telefonlinie
Break and test device for a telephony line

(43) Date de publication de la demande: 01.05.1996
(73) Titulaire: POUYET INTERNATIONAL, F-94200 Ivry-sur-Seine (FR)
(72) Inventeur: Letailleur, Jean-Pierre, F-74300 Cluses (FR); Bonvallat, Pierre, F-74300 Cluses (FR)
(74) Mandataire: Wind, Jacques

(56) Documents cités:
- WO-A-93/07654
- US-A- 5 420 920

## Description

La présente invention se rapporte à un dispositif de coupure et de test destiné à être intercalé sur une ligne téléphonique.

Dans les centraux téléphoniques ainsi que dans les installations privées, les lignes téléphoniques sont interconnectées soit par l'intermédiaire de réglettes d'interconnexion soit par l'intermédiaire de modules d'interconnexion.

A titre d'illustration de l'état de la technique peuvent être par exemple cités les documents FR-A-2 495 847, FR-A-2 662 042, FR-A-2 679 405, et US-A-5 420 920 qui concernent tous des réglettes d'interconnexion, ainsi que les documents EP-A-0 248 743, FR-A-2 661 283, et EP-A-0 637 853, qui concernent tous trois des modules d'interconnexion rapide de deux lignes téléphoniques monopaires.

En général, mais pas limitativement, ces modules et réglettes d'interconnexion ont pour but d'interconnecter sélectivement une ou plusieurs lignes de la Compagnie de distribution téléphonique ou "distributeur" à une ou plusieurs lignes correspondantes d'usagers ou "abonnés".

Les équipes chargées du dépannage et de l'entretien des lignes et installations téléphoniques doivent pouvoir faire des mesures, ou tests, aussi bien sélectivement sur une ligne d'abonné que sur la ligne correspondante du distributeur. Ils souhaitent quelquefois en outre pouvoir faire des mesures, ou tests, sur l'ensemble de ces deux lignes (ligne d'arrivée en provenance du distributeur et ligne de départ en direction de l'abonné) lorsqu'elles sont interconnectées.

Ces équipes souhaitent pouvoir faire ces deux ou trois mesures, ou tests, de manière simple et rudimentaire, en utilisant de ce fait deux fiches, qui sont alors préférentiellement (mais pas nécessairement) garnies chacune d'une pince-crocodile, dont une fiche, à pince-crocodile ou non, pour chaque borne ou brin de ligne, étant bien entendu que les lignes téléphoniques dont il s'agit sont des lignes bifilaires.

Il est également important, lorsque, comme c'est en général le cas, des conditions d'étanchéité sont de rigueur pour le point de test et de coupure, de pouvoir satisfaire à ces conditions d'étanchéité sans devoir noyer, comme on le fait actuellement, les contacts métalliques, que l'on vient toucher avec les fiches de test et qui sont en conséquence classiquement placés tout au fond de petits orifices de test respectifs et ouverts à l'air libre, dans un classique gel d'étanchéité qui est finalement vite évacué après quelques opérations de test, par le seul fait d'utiliser ces fiches en les enfonçant alors nécessairement dans le gel, puis en les en retirant une fois le test effectué.

Il serait en conséquence souhaitable d'avoir à sa disposition un "point de test" qui soit éventuellement étanche sans utilisation d'un gel pour ceci, et permette d'effectuer, à l'aide donc de simples fiches éventuellement équipées de pinces-crocodile, les deux ou trois mesures précitées. Pour ceci, il est indispensable que ce "point de test" soit aussi un "point de coupure" qui réalise, de préférence automatiquement, la coupure de la liaison distributeur-abonné lorsque l'on veut faire ce test, faute de quoi il est bien-entendu impossible de tester séparément la ligne du distributeur et la ligne de l'abonné.

Il faudrait pouvoir effectuer ces tests sans devoir se procurer et brancher, comme on le fait parfois, un "module de test" spécialement conçu à cet effet, et, comme ci-dessus mentionné, tout en respectant les normes d'étanchéité lorsque celles-ci sont de rigueur.

Il est également important de pouvoir utiliser les fiches de test, qu'elles soient équipées de pinces-crocodile ou non, en toute sécurité, en particulier sans risquer de toucher avec celles-ci les bornes de ligne qui ne doivent justement pas, pour le test considéré, être mises en contact avec ces fiches.

L'invention se propose de résoudre ces objectifs. Elle se rapporte à cet effet à un dispositif de test et de coupure destiné à être intercalé sur une ligne téléphonique bifilaire pour typiquement relier les deux bornes d'arrivée de la ligne du distributeur, ou "ligne d'arrivée", aux deux bornes de départ de la ligne d'abonné, ou "ligne de départ", ce dispositif étant caractérisé en ce qu'il est réalisé sous forme d'un puits de test à l'intérieur duquel se trouvent d'une part un couple de bornes libres d'arrivée de la ligne d'arrivée et d'autre part un couple de bornes libres de départ de la ligne de départ ce puits s'ouvrant vers l'extérieur lorsque l'on vient en ouvrir en conséquence un couvercle de fermeture, ces deux couples de bornes étant, lorsque ce couvercle est ouvert, électriquement isolés l'un de l'autre et chaque borne devenant alors sélectivement accessible, de l'extérieur et par l'ouverture alors béante du puits, par une fiche de test mono-contact respective, du genre pince-crocodile ou fiche-banane par exemple, des moyens mécaniques associés au moins partiellement au couvercle, étant par ailleurs prévus pour réaliser automatiquement l'interconnexion de ces deux couples de bornes lorsque ce couvercle est refermé sur ce puits.

Avantageusement, ledit couvercle coopère avec un joint d'étanchéité la fermeture, ce qui évite d'avoir à remplir ce puits par un gel d'étanchéité.

Préférentiellement, ces bornes de test sont constituées chacune par une extrémité libre d'une lame ou brin métallique, et sont positionnées dans ledit puits de manière à pouvoir être chacune pincées, de l'extérieur quand ledit couvercle est ouvert, par une pince crocodile de test respective, équipant par exemple respectivement une fiche de test.

Avantageusement alors, chaque extrémité libre de la ligne d'arrivée est placée à proximité de l'extrémité libre conjuguée de la ligne de départ, et de sorte qu'il soit possible de pincer, à l'aide d'une pince-crocodile placée à cheval sur ces deux extrémités libres, ces deux bornes conjuguées à la fois, afin de réaliser ainsi, le couvercle étant ouvert et en utilisant deux pinces-crocodile, une mise en continuité de la totalité de la ligne ainsi qu'un test de cette dernière.

De toute façon, l'invention sera bien comprise, et ses différents avantages et caractéristiques ressortiront mieux, lors de la description suivante de trois exemples non-limitatifs de réalisation, en référence au dessin schématique annexé dans lequel :
- Figure 1 est une vue en perspective partiellement éclatée d'un classique module d'interconnexion rapide de deux lignes téléphoniques, ce module étant toutefois muni d'un dispositif de test et de coupure conforme à l'invention et dont le couvercle ou volet basculant de fermeture est ici ouvert.
- Figure 2 montre ce même dispositif de test et de coupure, tel qu'il est monté dans son puits récepteur, son couvercle de fermeture (non représenté) étant ouvert comme c'est le cas en Figure 1.
- Figure 3 montre ce même couvercle ou volet en position de fermeture.
- Figure 4, qui est une vue semblable à Figure 2, montre la position forcée que prennent les deux contacts élastiques de coupure lorsque ce couvercle ou volet est fermé comme en Figure 3.
- Figure 5 montre comment, ce couvercle ou volet étant ouvert, on vient tester une borne de ligne à l'aide d'une fiche munie d'une pince-crocodile.
- Figure 6 montre comment il est alors impossible de toucher le contact élastique de coupure correspondant avec cette pince-crocodile, et donc de réaliser accidentellement une connexion électrique indésirable.
- Figure 7 est une demi-coupe transversale et simplifiée du dispositif selon Figure 5, qui montre les trois positions possibles, selon l'invention, pour cette même pince-crocodile.
- Figure 8 est une vue partielle, en perspective, d'une première variante de réalisation de ce dispositif de test et de coupure, avec son couvercle fermé.
- Figure 9 est une vue partielle, en perspective semblable à Figure 2, d'une deuxième variante de réalisation de ce dispositif de test et de coupure, avec son couvercle fermé.
- Figure 10 montre, en perspective, le dispositif de la figure 9, avec son couvercle ouvert.
- Figures 11 et 12 montrent très schématiquement comment est effectuée l'ouverture du couvercle basculant qui équipe le dispositif des figures 9 et 10.

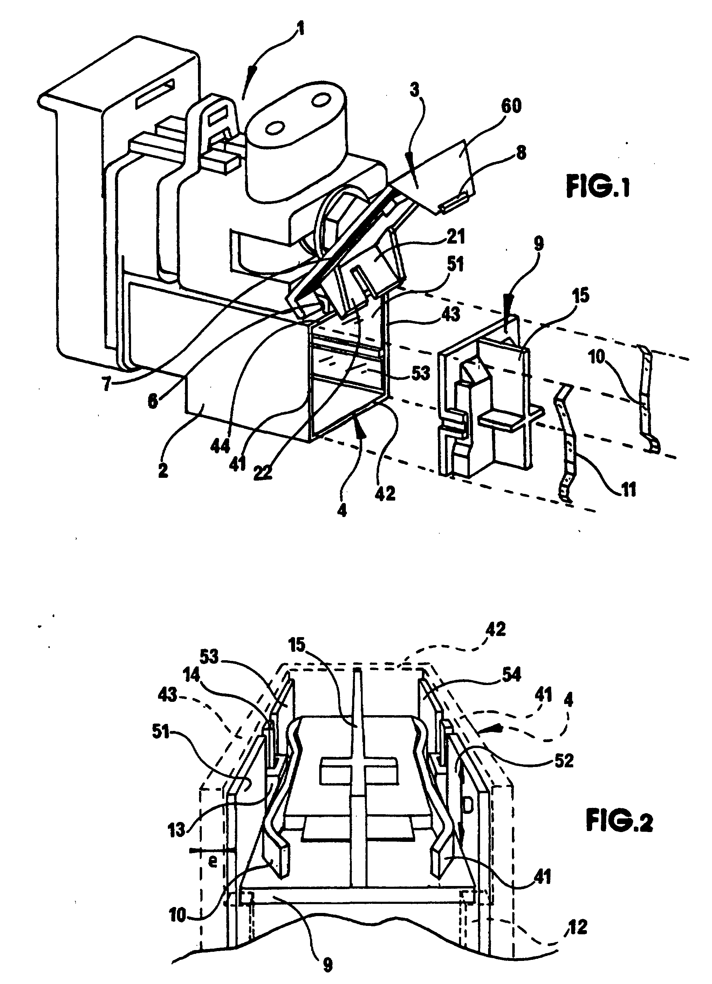

Les figures 1 à 7 schématisent une forme préférentielle de réalisation de l'invention.

On reconnaît sur la figure 1 un module 1 d'interconnexion rapide de deux lignes téléphoniques monopaires, typiquement d'une ligne téléphonique du réseau téléphonique distributeur, ou ligne d'arrivée, et d'une ligne téléphonique d'abonné, ou ligne de départ. Un module de ce type est par exemple décrit dans le document EP-A-0 637 853.

Comme il est expliqué dans ce document EP-A-0 637 853, le module 1 comporte, entre autres, un élément enfichable 2 qui est un élément de mise en continuité de la ligne d'arrivée fournie par le distributeur et de la ligne de départ vers l'abonné. Cet élément 2 pourrait aussi contenir entre autres un parasurtension destiné à la protection contre les surtensions.

L'élément enfichable 2 de la figure 1 diffère cependant de celui selon ce document EP-A-0 637 853 par le fait qu'il comporte, au niveau de sa partie extrême supérieure donnant vers l'extérieur et comprenant un couvercle de fermeture 3, un dispositif de coupure et de test conforme à la présente invention.

En simplifiant les choses, selon Figure 2 en particulier, cette partie supérieure de l'élément 2 se présente sous la forme d'un puits 4 en matière plastique moulée et à section rectangulaire. L'épaisseur "e" des quatre parois 41 à 44 de ce puits est relativement faible, par exemple de l'ordre du millimètre pour fixer les idées.

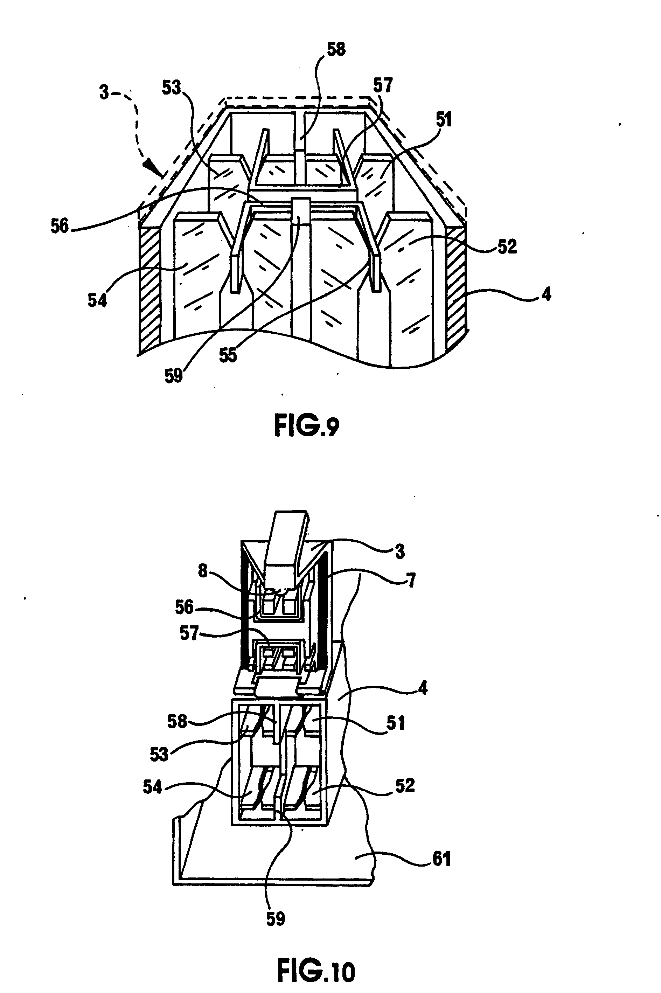

Sur la face interne des deux parois en regard 41 et 43 sont rapportées, par exemple par collage à l'aide d'une résine, quatre lames métalliques 51 à 54, qui sont par exemple des lames de cuivre réalisées par une technique de circuit découpé:
. Deux premières lames 51 et 52 qui sont en regard ou vis-à-vis l'une de l'autre, la lame 51 qui est rapportée sur la face interne de la paroi 43 étant connectée électriquement à une première borne ou brin de la ligne d'abonné, ou ligne de départ, tandis que la lame 52 qui est rapportée sur la face interne de la paroi opposée 41 est connectée électriquement à la deuxième borne ou brin de la ligne d'abonné. Par exemple, ces deux lames 51 et 52 viennent, par leurs deux extrémités opposées à celles visibles sur la figure 2, s'enficher respectivement sur les deux contacts-lyre 482 et 492 de la figure 10 du document EP-A-0 637 853 précité et qui sont reliés aux deux brins de la ligne d'abonné ou de départ, les deux cavaliers de mise en continuité 41 et 42 ou 411 et 421 de cette figure 10 de EP-A-0 637 853 n'existant bien entendu pas dans l'élément enfichable 2 considéré ici, puisqu'ils sont justement remplacés par le présent dispositif conforme à l'invention. A noter que les deux autres extrémités (extrémités supérieures sur la figure 2) respectives desdites lames 51 et 52 sont des extrémités libres qui constituent de ce fait un couple de bornes libres de départ de la ligne d'abonné, ou ligne de départ.
. Deux deuxièmes lames 53 et 54 qui sont elles-aussi en regard l'une par rapport à l'autre, la lame 53 qui est rapportée, à côté de la lame 51 et parallèlement à celle-ci, sur la face interne de la paroi 43 étant connectée électriquement à une première borne ou brin de la ligne du distributeur, ou ligne d'arrivée, tandis que la lame 54 qui est rapportée, à côté de la lame 52 et parallèlement à celle-ci, sur la face interne de la paroi opposée 41 est connectée électriquement à la seconde borne ou brin de cette ligne d'arrivée. Par exemple, ces deux lames 53 et 54 viennent, par leurs extrémités opposées à celles visibles sur la figure 2, s'enficher respectivement sur les deux contacts-lyre 462 et 472 de la figure 10 de EP-A-0 637 853. A noter que, bien évidemment, ces dernières extrémités des lames 51 à 54 présentent chacune, pour pouvoir s'enficher dans ces contacts-lyre, un épaulement qui les écarte de leurs parois respectives 43 ou 41. Là encore, les deux autres extrémités (extrémités supérieures sur la figure 2) de ces deux lames 53 et 54 sont des extrémités libres qui constituent un couple de bornes libres d'arrivée de la ligne du distributeur, ou ligne d'arrivée.

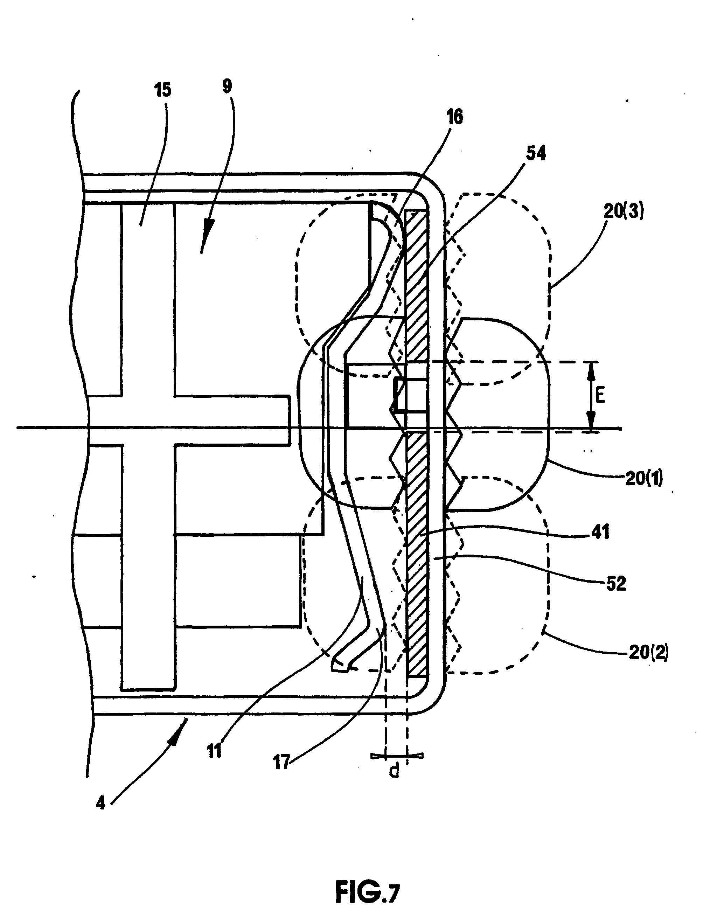

A noter aussi, comme on le voit particulièrement bien sur la figure 7, que les lames 52 et 54 qui sont rapportées sur une même paroi 41 sont séparées l'une de l'autre par un espace isolant E relativement faible, par exemple de l'ordre de 1 à 2 millimètres pour fixer les idées, et il en est exactement de même pour les lames 51 et 53 qui sont rapportées sur la paroi opposée 43 du puits isolant 4. L'épaisseur des lames 51 à 54 est elle-aussi relativement faible, par exemple de l'ordre de 0,7 millimètres. On expliquera ultérieurement pourquoi ces écartements et ces épaisseurs sont relativement faibles, mais l'on peut dire d'ores et déjà que ces dimensionnements sont conditionnés par les dimensions des pinces-crocodile qui seront utilisées pour réaliser les trois tests de ligne précités souhaités et assurer les isolements nécessaires aux performances requises pour ce type de produit.

A l'extérieur de la paroi 44 du puits 4, au niveau de l'extrémité supérieure libre de ce puits, est prévue une charnière 6 d'articulation du couvercle ou volet basculant 3 de fermeture de ce puits. On notera avec intérêt que ce couvercle 3 est garni, sur sa face interne, d'un joint d'étanchéité 7 dont la forme rectangulaire est conjuguée de celle de l'ouverture du puits 4. Il n'est en conséquence pas nécessaire de remplir ce puits à l'aide d'un gel d'étanchéité, ce qui facilite la mise en oeuvre pratique de la présente invention comme on l'expliquera ci-après. Bien entendu, dans le cas, à vrai dire assez rare, où une telle étanchéité ne serait pas indispensable pour ce puits 4, on pourrait très bien se passer du joint 7.

Le couvercle plastique 3 est classiquement muni d'une patte de fermeture par encliquetage 8.

Le dispositif est prévu pour que la fermeture du couvercle 3 entraîne la mise en continuité de la ligne téléphonique, en reliant automatiquement pour ceci les deux lames ou bornes 53,54 de la ligne d'arrivée respectivement aux deux lames ou bornes associées 51,52 de la ligne de départ, alors qu'à contrario cette liaison est coupée lorsque le couvercle 3 est ouvert, par le fait que les deux lames, ou bornes, d'arrivée 53,54 ne sont alors pas connectées électriquement aux deux lames, ou bornes, de départ respectivement associées 51,52.

Le dispositif de l'invention inclut en conséquence, dans cet exemple de réalisation, une pièce isolante, qui est avantageusement amovible dans cet exemple de réalisation et qui reçoit deux pattes métalliques et élastiques de contact électrique 10 et 11.

Lorsque la pièce isolante de support 9 est mise en place dans le puits 4, elle repose sur des butées isolantes 12 prévues à cet effet. Deux glissières 13 de cette pièce 9 coopèrent avec deux nervures conjuguées du puits 4, pour assurer un détrompage et faciliter la mise en place adéquate et aisée de cette pièce 9. Un croisillon en relief 15 permet de saisir cette pièce 9 entre le pouce et l'index ou à l'aide d'une pince.

Lorsque le volet 3 est ouvert, les pattes élastiques 10 et 11 sont au repos et elles adoptent la position représentée en Figures 2 et 7 : elles viennent à une première extrémité 16 en appui élastique ferme contre la lame associée, respectivement 53 et 54, qui est reliée au brin de la ligne d'arrivée associé, tandis qu'à leur autre extrémité 17 elles arrivent à distance "d" de la lame correspondante, respectivement 51 et 52 qui est reliée au brin de ligne de départ ou d'abonné. L'intervalle d'air "d" est par exemple de l'ordre de 1 à 2 millimètres. Dans cette position, la continuité de la ligne téléphonique n'est pas assurée, puisque les deux bornes 53,54 relatives à la ligne d'arrivée ne sont pas connectées électriquement aux deux bornes associées 51,52, qui sont relatives à la ligne de départ.

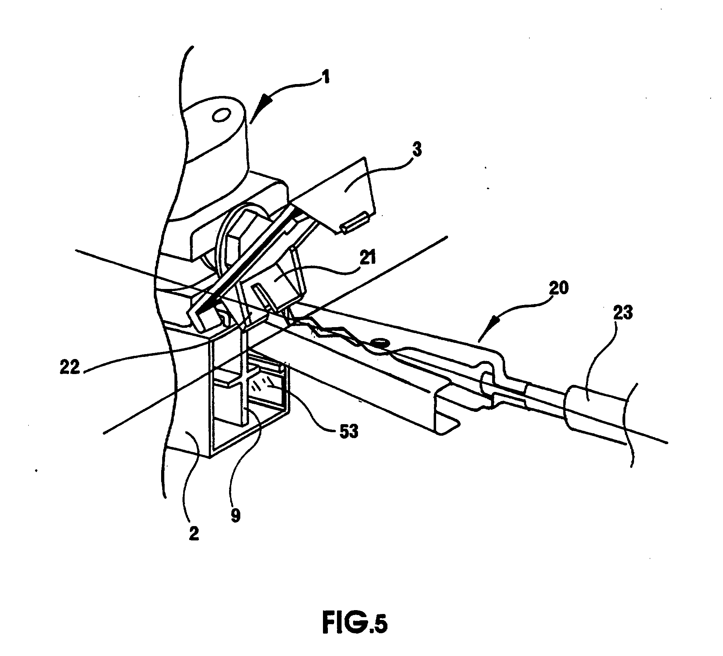

A noter que les butées 12 sont placées suffisamment bas dans le puits 4 pour que la pièce 9 laisse, lorsqu'elle est mise en place, une accessibilité suffisante aux lames 51 à 54, afin que ces dernières puissent sélectivement être pincées, selon Figure 5, entre les deux mâchoires d'une pince-crocodile 20, comme on le verra ci-après. Par exemple, ces lames 51 à 54 dépassent de cette pièce 9 d'une distance "D" qui est par exemple de l'ordre du centimètre.

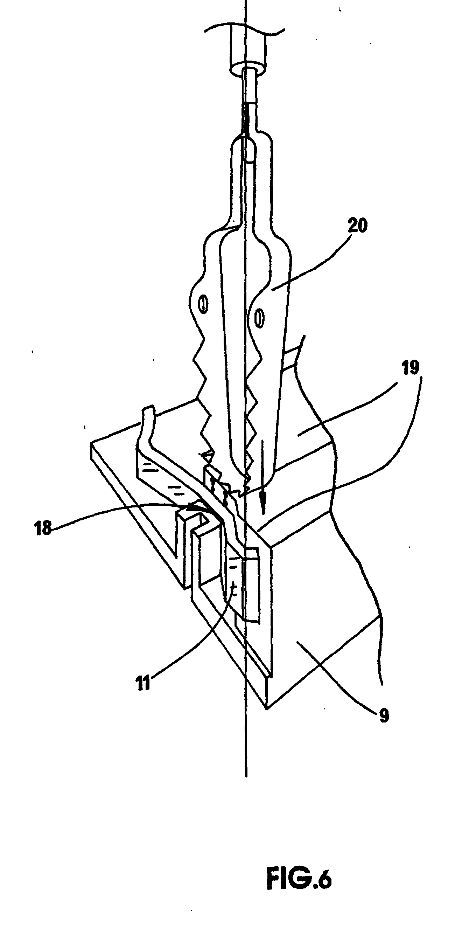

A noter également, comme on le voit particulièrement bien sur la figure 6, que si chaque contact élastique 10,11 est, lorsqu'il est encastré sur sa pièce réceptrice 9, enfoncé dans une rainure réceptrice 18 de cette pièce 9, la surface supérieure 19 de la pièce 9 arrive en surplomb par rapport à ce contact 11 ou 10, de sorte qu'une pince-crocodile 20 (dont une seule moitié est représentée en Figure 6) qui vient pincer la paroi 41 ou 43 du puits 4, ne risque en aucun cas de venir accidentellement toucher ce contact respectif 11 ou 10.

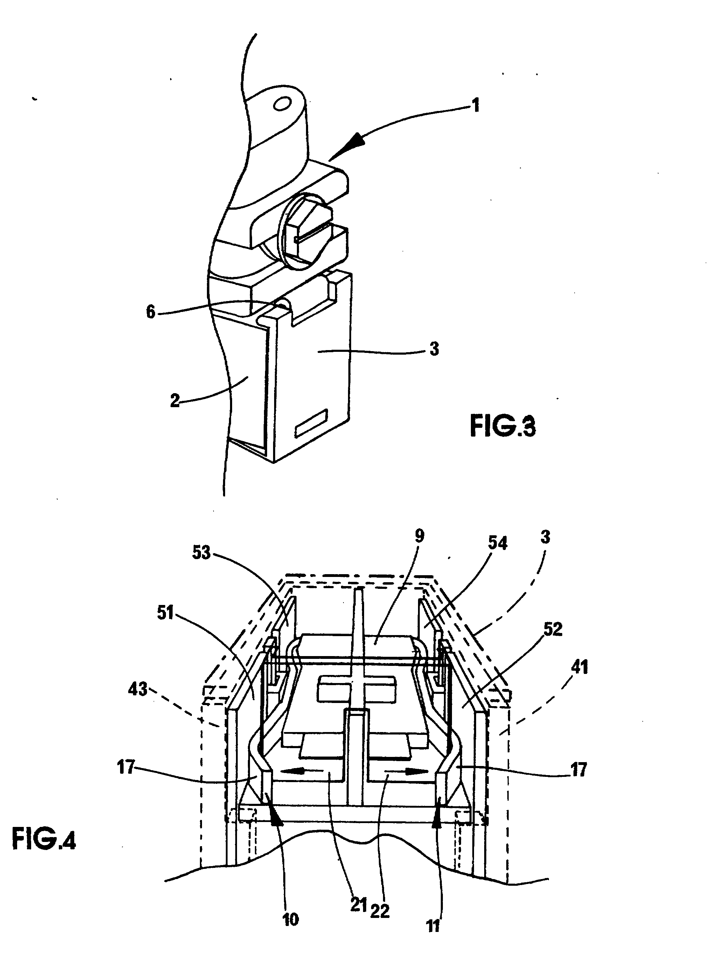

Enfin, afin de permettre, comme on l'expliquera maintenant, la mise en continuité automatique de la ligne téléphonique lorsque l'on referme, selon Figure 3, le couvercle 3, la face interne de ce couvercle est munie, de moulage, de deux pattes protubérantes 21 et 22, ou poussoirs, dont le rôle est, selon Figure 4, d'écarter les deux extrémités respectives 17 des deux contacts élastiques 10 et 11 afin de venir alors les plaquer contre leurs deux lames respectivement conjuguées 51 et 52, et assurer ainsi la mise en continuité de la ligne téléphonique par le fait que les deux bornes d'arrivée 53 et 54 sont alors reliées électriquement, par les contacts élastiques 10 et 11, aux deux bornes de départ correspondantes 51 et 52.

Dans de nombreux cas, il sera avantageux de connecter, à l'intérieur du puits 4 par exemple, les deux bornes de départ 51 et 52 aux deux bornes de ligne d'un parasurtension du commerce, de sorte que l'installation téléphonique de l'abonné sera toujours protégée contre les surtensions (en particulier contre les coups de foudre), que le couvercle 3 soit fermé ou non.

Le fonctionnement de ce dispositif de test et de coupure est le suivant :

Lorsque le volet 3 est ouvert, selon Figures 1,2,5,6, et 7, les extrémités 17 des deux contacts élastiques 10 et 11 sont isolées par un intervalle d'air "d" des deux bornes de départ respectives 51 et 52. La ligne d'arrivée, bornes 53 et 54, n'est donc pas connectée à la ligne de départ, bornes 51 et 52, de sorte que la ligne téléphonique distributeur-abonné est coupée au niveau du puits 4.

En utilisant deux pinces-crocodile 20, montées chacune sur une fiche 23 respectivement reliées aux deux bornes d'entrée (non représentées) d'un appareil de test, il est alors aisé, en pinçant respectivement les deux parois 43 et 41 qui portent les lames 51 à 54, d'effectuer les trois tests suivants (voir en particulier la figure 7) :
- . Premier test : On branche, en pinçant la paroi correspondante 41,43, chaque pince-crocodile 20 à cheval sur les deux lames, telles que 52 et 54, de départ et d'arrivée qui équipent la paroi correspondante, telle que la paroi 41 seule visible en Figure 7. La position de la pince-crocodile est alors celle représentée en traits pleins sur la figure 7 et désignée par la référence 20(1).
   Les deux pinces-crocodile 20 réalisent alors par elles-mêmes, du fait qu'elles viennent pincer chacune deux bornes associées d'un même brin de ligne, par exemple les bornes 52 et 54, la mise en continuité manquante de la ligne téléphonique. L'appareil de test auquel elles sont reliées peut alors ainsi réaliser un test de la ligne téléphonique entière, comprenant donc aussi bien la partie "distributeur" en amont du point de coupure de l'invention, que la partie "abonné" en aval de ce point de coupure (test dérivation).
- . Deuxième test : On branche maintenant respectivement les deux pinces-crocodile 20 en position 20(2) de la figure 7, c'est-à-dire en ne pinçant avec chaque pince, avec la paroi réceptrice correspondante 41 ou 43, que la lame associée 51 ou 52 qui est respectivement relative à la ligne de départ. On réalise alors un test de la seule partie "abonné", en aval du point de coupure de l'invention. Tel que montré en Figure 6, la surépaisseur de la surface de contact 19 de la pièce isolante 9 empêche la pince-crocodile 20 de venir alors accidentellement toucher le contact élastique voisin 11 ou 10.
- . Troisième test : On branche cette fois-ci les deux pinces-crocodile 20 en position 20(3) de la figure 7, c'est-à-dire en ne pinçant avec chaque pince, avec la paroi réceptrice correspondante 41 ou 43, que la lame associée 54 ou 53 qui est respectivement relative à la ligne d'arrivée.
   On réalise alors un test de la seule partie "distributeur", en amont du point de test et de coupure de l'invention.

On rappellera ici le grand intérêt du caractère étanche du couvercle 3, assuré par son joint 7. De très nombreux modules doivent en effet pouvoir être en particulier installés à l'extérieur, et sont donc sujets aux poussières et aux intempéries. En l'absence d'autre moyen d'étanchéité, il est alors courant de remplir les orifices apparents avec un gel d'étanchéité. Si le couvercle 3 n'était pas étanche, il faudrait alors remplir le puits 4 d'un tel gel d'étanchéité, ce qui rendrait les opérations de test précitées très problématiques car les pinces-crocodile 20 enlèveraient ce gel à chaque fois qu'elles seraient utilisées.

Lorsque l'on referme le couvercle 3, selon figures 3 et 4, les deux pattes ou poussoirs 21,22 de ce couvercle viennent pousser latéralement, comme indiqué par les flèches sur la figure 4, les deux extrémités libres 17 des deux contacts élastiques 10 et 11, ce qui vient plaquer ces deux extrémités contre la lame voisine 51 et 52, assurant alors ainsi, comme expliqué ci-dessus, la mise en continuité automatique de la ligne téléphonique.

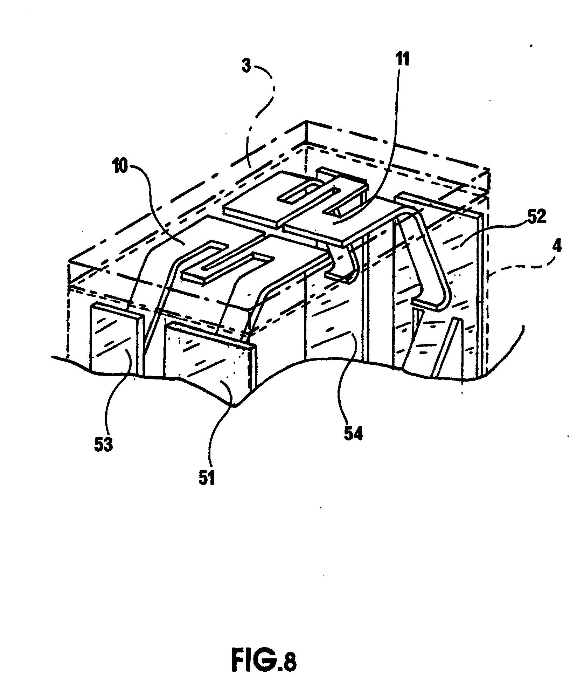

La Figure 8 schématise une variante de réalisation du dispositif selon les figures 1 à 7, pour laquelle les contacts élastiques de coupure automatique 10,11 sont inclus dans le couvercle 3, et par suite ne se placent en position (représentée sur le dessin) de mise en continuité de la ligne que quand ce couvercle 3 est mis en place sur son puits récepteur 4. A noter que, dans cet exemple de réalisation et non limitativement, ledit couvercle 3 n'est pas un couvercle basculant, mais simplement un couvercle qui vient se poser sur le puits 4 pour en assurer la fermeture.

A noter, en ce qui concerne les deux exemples de réalisation qui viennent d'être décrits, que, si par exemple le puits 4 avait une forme suffisamment allongée, les lames de test 51 à 54 pourraient être toutes positionnées sur une seule et même paroi de ce puits.

Cette, ou ces deux, parois réceptrices des lames de test 51 à 54 pourraient être des parois placées à l'intérieur de l'enceinte externe du puits 4, au lieu d'être des parois constitutives de cette enceinte.

Le puits 4 pourrait également faire partie du connecteur ce qui éviterait d'avoir à utiliser un module complémentaire.

A noter aussi que, une pince-crocodile ayant deux mâchoires venant pincer les deux faces de sa paroi réceptrice, il est possible de placer deux lames conjuguées, telles que les lames 52 et 54 ou les lames 51 et 53, qui sont relatives à un même brin de ligne téléphonique, l'une près de l'autre mais de part et d'autre de leur paroi réceptrice.

En variante également, la pièce 9 pourrait en fait être constituée par le fond du puits 4, etc...

Un troisième exemple de réalisation, sensiblement différent des deux précédents réprésentés sur les figures 1 à 8, d'un dispositif de test et de coupure conforme à l'invention est représenté sur les figures 9 à 12.

Selon cette forme de réalisation, les lames 51 à 54 des deux dispositifs précédents ne sont plus solidaires de parois isolantes, telles que les parois du puits 4, mais elles sont remplacées par des lames de contact semi-rigides et munies chacune d'une fente axiale 55 apte à recevoir un contact métallique conjugué. Plus précisément, dans cet exemple, les contacts 51 à 54 sont des contacts-lyre en soi très classiques, et la mise en continuité de la ligne est ici réalisée par deux cavaliers métalliques 56,57 (respectivement 56 pour réaliser la liaison électrique entre les lames fendues 54-52 et 57 pour réaliser la liaison électrique entre les lames fendues 53-51) qui viennent respectivement s'encastrer (Figure 9) dans deux fentes successives 55 des deux contacts conjugués et qui sont portés par le couvercle basculant 3. La continuité de la liaison ditributeur-abonné est donc assurée, comme représenté en Figure 9, lorsque le couvercle basculant 3 est refermé sur le puits 4, tandis qu'elle ne l'est plus, selon Figure 10, lorsque ce couvercle est ouvert.

Ces lames de contact 51 à 54 sont placées à distance des parois du puits auxquelles elles sont parallèles, au lieu d'être plaquées contre ces parois comme dans les deux exemples de réalisation précédents. Pour pincer, avec une pince-crocodile, l'un ou l'autre des contacts-lyre 53 ou 51 (qui sont placés à proximité immédiate de la paroi sur laquelle le couvercle 3 est articulé), on introduit les deux machoires de cette pince-crocodile dans le puits 4. En revanche, pour pincer l'un ou l'autre des deux autres contacts-lyre 54 ou 52, on vient pincer à la fois ce contact (avec une première mâchoire de la pince-crocodile) et la paroi parallèle et immédiatement voisine du puits (avec l'autre mâchoire de la pince-crocodile).

On remarquera que deux tronçons de paroi médians 58 et 59 sont en outre prévus dans ce puits 4 pour bien maintenir en place les contacts-lyre, 51-53 et 52-54 respectivement. Tels qu'ils sont représentés pour cet exemple de réalisation, ces deux tronçons de paroi 58,59 arrivent jusqu'au niveau de l'ouverture supérieure du puits 4. Il n'est par conséquent pas possible de placer une pince-crocodile soit à cheval sur les contacts conjugués 51-53, soit à cheval sur les contacts conjugués 52-54 : il n'est donc pas possible de réaliser le commode test précité (et illustré sur la figure 7) de continuité de la ligne. Ceci illustre le caractère non-limitatif, en ce qui concerne cette propriété particulière, de la présente invention.

De toute façon, si le cahier des charges impose ce test de mise en continuité, il est alors aisé de raccourcir de quelques millimètres les tronçons de paroi 58 et 59 pour les faire arriver un peu plus bas et pouvoir ainsi placer les pinces-crocodile à cheval sur les contacts conjugués 51-53 et 52-54 comme illustré en Figure 7 et détaillé précédemment.

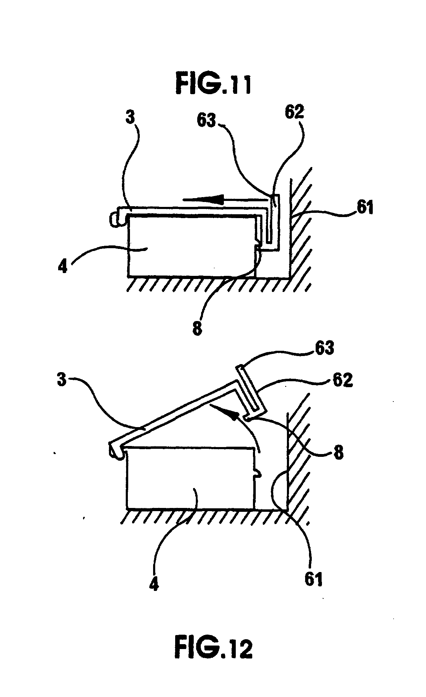

Les figures 11 et 12 illustrent une avantageuse caractéristique supplémentaire de ce point de test et de coupure.

Le précédent dispositif de la figure 1 utilise, on l'a vu, un cliquet 8 pour assurer la fermeture du volet 3. Ce cliquet est porté par une languette 60 (figure 1). n arrive souvent alors que le puits soit positionné tellement près d'une paroi voisine 61 (figure 10) du réceptacle qu'il devienne alors impossible d'accéder manuellement au cliquet 8 quand le couvercle 3 est fermé sur le puits 4. Il faut alors utiliser un outil approprié, tel qu'un petit tourne-vis.

Pour remédier à cet inconvénient, l'invention propose de remplacer la languette plane 60 de support du cliquet de fermeture 8 du couvercle 3, par une languette en forme d'étrier en "U" 62 dont l'extrémité libre 63 remonte jusqu'au niveau du couvercle 3, et même au dessus, de sorte que, comme illustré aux figures 11 et 12, il suffit de tirer, avec le doigt, cette extrémité libre 63 en direction du couvercle 3 pour entrainer le déclipsage du cliquet de fermeture 8 et l'ouverture du couvercle 3. Bien-entendu, une telle languette en forme d'étrier 62 peut aussi équiper les deux dispositifs de test précédemment décrits.

Comme il va de soi, l'invention n'est pas limitée aux exemples de réalisation qui viennent d'être décrits, et de nombreuses variantes de ce dispositif de test et de coupure sont envisageables.

L'utilisation de pinces-crocodile pour effectuer les tests respectifs de la ligne d'arrivée et de la ligne de départ n'est nullement obligatoire pour la mise en oeuvre de cette invention et, pour ces tests, on peut très bien utiliser de simples fiches de test, telles que des fiches-banane par exemple, qui ne sont pas équipées de pinces-crocodile.

Les bornes de test 51 à 54 peuvent ne pas être constituées par des lames. Il peut tout aussi bien s'agir de brins métalliques, ou même de contacts tubulaires, en particulier dans le cas de la réalisation selon les figures 9 et 10 où les contacts-lyre peuvent être remplacés par des fiches fendues tubulaires classiques.

## Revendications

1. Dispositif de test et de coupure adapté à être intercalé sur une ligne téléphonique bifilaire pour typiquement relier les deux bornes d'arrivée de la ligne du distributeur, ou "ligne d'arrivée", aux deux bornes de départ de la ligné d'abonné, ou "ligne de départ",
**caractérisé en ce qu'**il est réalisé sous forme d'un puits de test (4) à l'intérieur duquel se trouvent d'une part un couple de bornes libres (53,54) d'arrivée de la ligne d'arrivée et d'autre part un couple de bornes libres (51,52) de départ de la ligne de départ, ce puits (4) s'ouvrant vers l'extérieur lorsque l'on vient en ouvrir en conséquence un couvercle de fermeture (3), ces deux couples de bornes (51,52 et 53,54) étant, lorsque ce couvercle (3) est ouvert, électriquement isolés l'un de l'autre et chaque borne (51,52,53,54) devenant alors sélectivement accessible, de l'extérieur et par l'ouverture alors béante du puits (4), par une fiche de test mono-contact respective, du genre pince-crocodile (20) ou fiche-banane (23) par exemple, des moyens mécaniques (10,11 - 56,57) associés au moins partiellement au couvercle (3), étant par ailleurs prévus pour réaliser automatiquement l'interconnexion de ces deux couples de bornes (53,54 - 51,52) lorsque ce couvercle (3) est refermé sur ce puits (4).

2. Dispositif de test et de coupure selon la revendication 1, **caractérisé en ce que** ledit couvercle (3) coopère avec un joint d'étanchéité à la fermeture (7).

3. Dispositif de test et de coupure selon la revendication 1 ou la revendication 2, **caractérisé en ce que** ces bornes (51 à 54) sont constituées chacune par une extrémité libre d'une lame ou brin métallique, et sont positionnées dans ledit puits (4) de manière à pouvoir être chacune pincées, de l'extérieur et quand ledit couvercle est ouvert, par une pince-crocodile de test respective (20), équipant par exemple respectivement une fiche de test (23).

4. Dispositif de test et de coupure selon la revendication 3, **caractérisé en ce que** chaque extrémité libre (53, 54) de la ligne d'arrivée est placée à proximité de l'extrémité libre conjuguée (51,52) de la ligne de départ, et de sorte qu'il soit possible de pincer, à l'aide d'une pince-crocodile (20(1)) placée à cheval sur ces deux extrémités libres, ces deux bornes conjuguées (52,54) à la fois, afin de réaliser ainsi, le couvercle (3) étant ouvert et en utilisant deux pinces-crocodile (20), une mise en continuité de la totalité de la ligne ainsi qu'un test de cette dernière.

5. Dispositif de test et de coupure selon l'une des revendications 1 à 4, **caractérisé en ce que** ledit couvercle (3) est un couvercle basculant.

6. Dispositif selon la revendication 5, **caractérisé en ce que**, ce couvercle (3) étant muni d'un cliquet de fermeture (8), ce cliquet est porté par une languette (62) en forme d'étrier en "U" dont l'extrémité libre (63) remonte au moins jusqu'au niveau de l'ouverture supérieure du puits (4), de sorte qu'il suffit de tirer avec le doigt sur cette extrémité libre (63) pour entraîner le déclipsage du cliquet (8) et l'ouverture du couvercle (3).

7. Dispositif de test de coupure selon l'une des revendications 1 à 6,
**caractérisé en ce qu'**il comprend une ou deux parois minces et isolantes (41,43) sur laquelle ou sur lesquelles sont rapportées:
• l'une près de l'autre sur une même paroi (41), en étant toutefois séparées l'une de l'autre par un espace d'isolement électrique (E) : deux lames conductrices (52,54), ou autres éléments conducteurs minces, reliées respectivement l'une à une première borne de la ligne d'abonné ou "de départ" et l'autre à la première borne correspondante de la ligne du distributeur ou "ligne d'arrivée" correspondante,
• l'une près de l'autre sur une même paroi (43), en' étant toutefois séparées l'une de l'autre par un espace d'isolement électrique (E) : deux autres lames conductrices (51,53), ou autres éléments conducteurs minces, reliées respectivement l'une à la deuxième borne de la ligne d'abonné et l'autre à la deuxième borne correspondante de la ligne du distributeur,
ces deux parois (41,43), ou cette paroi unique, ayant une tranche d'extrémité qui est accessible pour au moins une pince-crocodile (20) et ces quatre lames conductrices (51 à 54) ayant chacune une extrémité libre débouchant soit au ras de cette tranche, soit légèrement en retrait de celle-ci, chaque couple conjugué de lames, tel que par exemple les deux lames (54,52) respectivement connectées à la première borne d'arrivée et à la première borne de départ, et leur paroi isolante réceptrice (41) étant dimensionnés et agencés pour qu'il soit possible, en utilisant une pince-crocodile (20), de brancher cette pince-crocodile non seulement en pinçant uniquement et sélectivement l'une ou l'autre extrémité libre de l'une ou l'autre lame (54,52) tout en pinçant alors, par la tranche d'extrémité correspondante, la paroi (41) de support de cette lame, mais encore, en positionnant cette pince-crocodile (20) à cheval (20-1) sur ces deux lames conjuguées (54,52), de brancher celle-ci à la fois sur les deux extrémités libres de ces deux lames tout en réalisant par ce même branchement la mise en continuité, ou interconnexion, de la borne d'arrivée et de la borne de départ correspondantes, ce qui permet finalement, des moyens mécaniques (10,11,21,22) étant prévus pour couper normalement l'interconnexion entre le couple de bornes d'arrivée et le couple de bornes de départ lorsque l'on souhaite accéder aux deux couples correspondants de lames conductrices (53-54,51-52) à l'aide d'une paire de pinces-crocodile (20), de réaliser alors ainsi, au choix, soit un test de la ligne d'arrivée, soit un test de la ligne de départ, soit un test simultané de ces deux lignes avec mise en continuité de celles-ci à l'aide des deux pinces-crocodile, des moyens mécaniques (9,19) étant en outre prévus pour empêcher tout risque de mise en continuité accidentelle de deux bornes de ligne conjuguées lorsque l'on vient, avec une pince-crocodile (20), ne pincer qu'une extrémité de lame associée à une de ces deux bornes seulement.

8. Dispositif selon la revendication 7, **caractérisé en ce que** cette paroi ou ces deux parois (43,41) font partie dudit puits récepteur (4).

9. Dispositif selon la revendication 7, **caractérisé en ce que** cette paroi ou ces deux parois sont protégées par ledit puits récepteur (4).

10. Dispositif selon l'une des revendications 7 à 9, **caractérisé en ce que** le couvercle (3) est muni de pattes (21,22) d'écartement de contacts élastiques de liaison (10,11) qui sont prévus dans ce puits (4), l'écartement de ces contacts (10,11) entraînant la mise en continuité de la ligne téléphonique, alors que cette dernière est coupée (d) lorsque ce couvercle (4) est ouvert.

11. Dispositif selon l'une des revendications 7 à 10, **caractérisé en ce que** lesdits moyens mécaniques pour empêcher tout risque de mise en continuité accidentelle, sont constitués par une surépaisseur (19) d'une pièce isolante (9) de réception de contacts (10,11) de liaison respective entre les lames d'arrivée (53,54) et les lames de départ respectivement associées (51,52).

12. Dispositif selon la revendication 11, **caractérisé en ce que** cette pièce isolante (9) de réception des contacts de liaison (10,11) est positionnée à l'intérieur de ce puits (4).

13. Dispositif selon la revendication 12, **caractérisé en ce que** ladite pièce isolante (9) constitue le fond du puits (4).

14. Dispositif de test et de coupure selon l'une des revendications 1 à 6, **caractérisé en ce que** ces bornes libres d'arrivée (53,54) et de départ (51,52) sont chacune constituées par un contact métallique fendu (55), et en ce que la mise en continuité de la ligne lors de la fermeture dudit couvercle (3) est assurée par deux cavaliers (56,57) qui sont portés par ce couvercle (3) et qui viennent, à la fermeture dudit couvercle (3), s'introduire dans les fentes (55) respectives de ces contacts pour réaliser alors ladite mise en continuité de la ligne.

15. Dispositif selon la revendication 14, **caractérisé en ce que** ces contacts fendus (51 à 54) sont plats et sont maintenus à distance des parois du puits (4) auxquelles ils sont parallèles.

## Patentansprüche

1. Prüf- und Trennvorrichtung, die so ausgelegt ist, dass sie auf eine zweiadrige Telefonleitung geschaltet werden kann, um gewöhnlich die beiden Eingangsklemmen der Leitung des Versorgers, oder 'Ankunftsleitung', mit den Ausgangsklemmen der Teilnehmerleitung, oder 'Abgangsleitung', zu verbinden,
**dadurch gekennzeichnet, dass** diese Prüf- und Trennvorrichtung in Form eines Prüfschachtes (4) ausgeführt ist, in dessen Innerem sich einerseits ein Paar freier Eingangsklemmen (53, 54) der ankommenden Leitung und andererseits ein Paar freier Ausgangsklemmen (51, 52) der Abgangsleitung befinden, wobei dieser Schacht (49) nach außen öffnet, wenn man hierfür einen Schließdeckel (3) öffnet und diese zwei Paare von Klemmen (51, 52 und 53, 54) bei geöffnetem Deckel (3) gegeneinander elektrisch isoliert sind und jede Klemme (51, 52, 53, 54) dann von außen und durch die dann weit geöffnete Öffnung des Schachtes (4) mittels beispielsweise eines einpoligen Prüfsteckers, einer Krokodilklemme (20) oder eines Bananensteckers (23) selektiv zugänglich wird, wobei mechanische Mittel (10, 11 - 56, 57) wenigstens teilweise dem Deckel (3) zugeordnet und dafür vorgesehen sind, automatisch die Verbindung dieser zwei Paare von Klemmen (53, 54 - 51, 52) zu realisieren, wenn der Deckel (3) auf diesem Schacht (4) geschlossen ist.

2. Prüf- und Trennvorrichtung nach Anspruch 1, **dadurch gekennzeichnet, dass** der besagte Deckel (3) mit einer Schließdichtung (7) zusammenwirkt.

3. Prüf- und Trennvorrichtung nach Anspruch 1 oder Anspruch 2, **dadurch gekennzeichnet, dass** jede dieser Klemmen (51 bis 54) aus einem freien Ende eines Bleches oder eines Metallstücks besteht und in dem Schacht (4) so angebracht ist, dass man bei geöffnetem Deckel von außen an jede eine entsprechende Krokodilklemme (20) anklemmen kann, mit der beispielsweise ein Prüfstecker (23) ausgestattet ist.

4. Prüf- und Trennvorrichtung nach Anspruch 3, **dadurch gekennzeichnet, dass** jedes freie Ende (53, 54) der ankommenden Leitung in der Nähe des zugeordneten freien Endes (51, 52) der Abgangsleitung dergestalt angeordnet ist, dass es möglich ist, mit Hilfe einer Krokodilklemme (20(1)), die als Brücke auf diesen beiden freien Enden sitzt, gleichzeitig diese beiden zugeordneten Klemmen (52, 54) abzugreifen, um auf diese Weise bei geschlossenem Deckel (3) und unter Benutzung von zwei Krokodilklemmen (20) die Durchgängigkeit der gesamten Leitung zu verwirklichen und eine Prüfung dieser letzteren durchzuführen.

5. Prüf- und Trennvorrichtung nach einem der Ansprüche 1 bis 4, **dadurch gekennzeichnet, dass** der Deckel (3) ein klappbarer Deckel ist.

6. Vorrichtung nach Anspruch 5, **dadurch gekennzeichnet, dass** dieser Deckel (3) mit einer Sperrklinke (3) ausgestattet ist und diese Klinke von einer Feder (62) als U-Bügel gebildet ist, dessen freies Ende (63) mindestens bis in Höhe der oberen Öffnung des Schachtes (4) reicht, um das Ausklinken der Klinke (8) und das Öffnen des Deckels (3) zu bewirken.

7. Prüf- und Trennvorrichtung nach einem der Ansprüche 1 bis 6, **dadurch gekennzeichnet, dass** sie eine oder zwei dünne isolierende Wände (41, 43) enthält, an der oder an denen angebracht sind:
• dicht nebeneinander an ein und derselben Wand (41), jedoch voneinander durch einen elektrisch isolierenden Bereich (E) getrennt: zwei leitende Bleche (52, 54) oder andere dünne Leiterelemente, von denen das eine mit einer ersten Klemme der Teilnehmerleitung oder 'Abgangsleitung' und das andere mit der entsprechenden ersten Klemme der entsprechenden Leitung des Versorgers oder 'ankommenden Leitung' verbunden ist,
• dicht nebeneinander an ein und derselben Wand (43), jedoch voneinander durch einen elektrisch isolierenden Bereich (E) getrennt: zwei weitere leitende Bleche (51, 53) oder andere dünne Leiterelemente, von denen das eine mit einer zweiten Klemme der Teilnehmerleitung und das andere mit der entsprechenden zweiten Klemme der Leitung des Versorgers verbunden ist,
wobei diese zwei Wände (41, 43) oder diese Einzelwand einen Endstreifen haben, der für mindestens eine Krokodilklemme (20) zugänglich ist und jedes dieser vier leitenden Bleche (51 bis 54) ein freies Ende hat, das entweder in gleicher Höhe wie dieser Streifen ragt oder geringfügig darunter bleibt und jedes zugeordnete Paar von Blechen, zum Beispiel die Bleche (54, 52), die mit der ersten Eingangsklemme bzw. der ersten Abgangsklemme verbunden sind, und ihre isolierende Aufnehmerwand (41) so dimensioniert und so eingerichtet sind, dass es unter Benutzung einer Krokodilklemme (20) möglich ist, diese Krokodilklemme nicht nur einzig und allein an das eine oder andere freie Ende des einen oder anderen Bleches (54, 52) anzuklemmen, wobei dann über den entsprechenden Endstreifen insgesamt die Haltewand dieses Bleches abgegriffen wird, sondern auch, indem man diese Krokodilklemme (20) als Brücke(20-1) gleichzeitig auf die beiden freien Enden dieser zwei Bleche bringt, wodurch gerade durch diese Schaltung die Durchgängigkeit oder die Verbindung zwischen der Eingangsklemme und der jeweiligen Ausgangsklemme hergestellt wird, was schließlich ermöglicht, dass mechanische Mittel (10, 11, 21, 22) vorgesehen werden können, um die Verbindung zwischen dem Ankunftsklemmenpaar und dem Abgangsklemmenpaar zu trennen, wenn man Zugang zu den beiden entsprechenden Paaren von leitenden Adern (53-54, 51-52) mit Hilfe eines Paares von Krokodilklemmen (20) haben möchte, um dann auf diese Weise wahlweise entweder eine Prüfung der ankommenden Leitung oder eine Prüfung der Abgangsleitung oder eine gleichzeitige Prüfung dieser beiden Leitungen bei Herstellung der Durchgängigkeit derselben mit Hilfe von zwei Krokodilklemmen durchführen zu können, wobei außerdem mechanische Mittel (9, 19) vorgesehen sind, um jede Gefahr der zufälligen Herstellung der Durchgängigkeit der zwei zugehörigen Klemmen der Leitung zu verhindern, wenn man mit einer Krokodilklemme (20) nur ein Ende des an eine dieser zwei Klemmen angeschlossenen Bleches abgreifen will.

8. Vorrichtung nach Anspruch 7, **dadurch gekennzeichnet, dass** diese Wand oder diese zwei Wände (43, 41) Teil des Aufnahmeschachtes (4) sind.

9. Vorrichtung nach Anspruch 7, **dadurch gekennzeichnet, dass** diese Wand oder diese zwei Wände durch den Aufnahmeschacht (4) geschützt werden.

10. Vorrichtung nach einem der Ansprüche 7 bis 9, **dadurch gekennzeichnet, dass** der Deckel (3) mit Abstandslaschen (21, 22) für federnde Verbindungskontakte (10, 11), die in diesem Schacht (4) vorgesehen sind, ausgerüstet ist, wobei das Spreizen dieser Kontakte (10, 11) dazu führt, dass die Durchgängigkeit der Telefonleitung hergestellt wird, während diese letztere getrennt wird (d), wenn dieser Deckel (4) offen ist.

11. Vorrichtung nach einem der Ansprüche 7 bis 10, **dadurch gekennzeichnet, dass** die mechanischen Mittel zur Verhinderung eines jeglichen Risikos der zufälligen Herstellung der Durchgängigkeit aus einer Verdickung (19) eines Isolierstückes (9) für die Aufnahme der Verbindungskontakte (10, 11) zwischen den jeweils angeschlossenen Ankunftsblechen (53, 54) und Abgangsblechen (51, 52) gebildet werden.

12. Vorrichtung nach Anspruch 11, **dadurch gekennzeichnet, dass** dieses Isolierstück (9) für die Aufnahme der Verbindungskontakte (10, 11) im Innern dieses Schachtes (4) untergebracht ist.

13. Vorrichtung nach Anspruch 12, **dadurch gekennzeichnet, dass** das Isolierstück (9) den Boden des Schachtes (4) bildet.

14. Prüf- und Trennvorrichtung nach einem der Ansprüche 1 bis 6, **dadurch gekennzeichnet, dass** jede dieser freien Eingangsklemmen (53, 54) und Abgangsklemmen (51, 52) aus einem geschlitzten Metallkontakt (55) besteht, und dadurch, dass die Herstellung der Durchgängigkeit der Leitung beim Schließen des Deckels (3) durch zwei Brücken (56, 57) gewährleistet wird, welche von dem Deckel (3) getragen werden und die beim Schließen des Deckels (3) bewirken, dass sie in die jeweiligen Schlitze (55) eindringen, um damit die Durchgängigkeit der Leitung herzustellen.

15. Vorrichtung nach Anspruch 14, **dadurch gekennzeichnet, dass** die geschlitzten Kontakte (51 bis 54) eben sind und auf Abstand von den Wänden des Schachts, zu denen sie parallel sind, gehalten werden.

## Claims

1. Break and test device designed to be inserted into a two-wire telephone line, typically for connecting the two input terminals for the line from the distributor, or "incoming line", to the two output terminals for the subscriber line, or "outgoing line",
**characterized in that** it is produced in the form of a test well (4) inside which, on the one hand, a pair of free input terminals (53, 54) for the incoming line and, on the other hand, a pair of free output terminals (51, 52) for the outgoing line are situated, this well (4) opening towards the outside when a closure cover (3) is consequently opened, these two pairs of terminals (51, 52 and 53, 54) being, when this cover (3) is open, electrically isolated from each other and each terminal (51, 52, 53, 54) then becoming selectively accessible, from the outside and via the then wide-open opening of the well (4), by a respective single-contact test plug, for example of the crocodile clip (20) or banana plug (23) type, mechanical means (10, 11 - 56, 57) at least partially associated with the cover (3) being moreover provided in order to automatically interconnect these two pairs of terminals (53, 54
- 51, 52) when this cover (3) is closed down on this well (4).

2. Break and test device according to Claim 1,
**characterized in that** the said cover (3) engages with a seal (7) upon closure.

3. Break and test device according to Claim 1 or Claim 2, **characterized in that** these terminals (51 to 54) each consist of a free end of a metal blade or strand and each is positioned in the said well (4) so that each can be gripped, from the outside and when the said cover is open, by a respective test crocodile clip (20) with which, for example, a test plug (23) is respectively equipped.

4. Break and test device according to Claim 3,
**characterized in that** each free end (53, 54) of the incoming line is placed near the conjugate free end (51, 52) of the outgoing line and so that it is possible to grip, by means of a crocodile clip (20(1)) placed astride these two free ends, these two conjugate terminals (52, 54) at the same time, so as, in this way, with the cover (3) being open and by using two crocodile clips (20) to establish continuity of the entire line and to carry out a test on the latter.

5. Break and test device according to one of Claims 1 to 4, **characterized in that** the said cover (3) is a hinged cover.

6. Device according to Claim 5, **characterized in that**, when this cover (3) is provided with a closure catch (8), this catch is carried by a tab (62) in the form of a "U"-shaped yoke, the free end (63) of which rises at least as far as the level of the upper opening of the well (4), so that all that is required is to pull on this free end (63) with a finger in order to cause the catch (8) to be unfastened and the cover (3) to be opened.

7. Break and test device according to one of Claims 1 to 6,
**characterized in that** it comprises one or two thin and insulating walls (41, 43) on which are attached:
- close to each other on the same wall (41), while being, however, separated from each other by an electrical insulation space (E): two conducting blades (52, 54) or other thin conducting elements, one of these blades being connected to a first terminal of the subscriber or "outgoing" line and the other blade being connected to the corresponding first terminal of the line from the distributor or corresponding "incoming line";
- close to each other on the same wall (43), while being, however, separated from each other by an electrical insulation space (E): two other conducting blades (51, 53) or other thin conducting elements, one of these blades being connected to the second terminal of the subscriber line and the other blade being connected to the corresponding second terminal of the line from the distributor, these two walls (41, 43), or this single wall, having an end face which is accessible by at least one crocodile clip (20) and these four conducting blades (51 to 54) each having a free end emerging either flush with this face or slightly set back from it, each conjugate pair of blades, such as, for example, the two blades (54, 52) connected to the first input terminal and to the first output terminal respectively, and their receiving insulating wall (41) being dimensioned and designed so that it is possible, using a crocodile (20), not only to connect this crocodile clip by gripping only and selectively one or other free end of one or other blade (54, 52) while then at the same time gripping, via the corresponding end face, the support wall (41) of this blade, but also, by positioning this crocodile clip (20) astride (20(1)) these two conjugate blades (54, 52), to connect this crocodile clip at the same time to the two free ends of these two blades while at the same time, by this same connection, establishing continuity, or interconnection, between the corresponding input terminal and the corresponding output terminal, thereby finally making it possible, with mechanical means (10, 11, 21, 22) being provided for normally breaking the interconnection between the pair of input terminals and the pair of output terminals when it is desired to gain access to the two corresponding pairs of conducting blades (53-54, 51-52), using a pair of crocodile clips (20), to thus carry out, as required, either a test of the incoming line or a test of the outgoing line, or a simultaneous test of both these lines with continuity being established between them using two crocodile clips, mechanical means (9, 19) furthermore being provided to prevent any risk of accidentally establishing continuity between two conjugate line terminals when, with one crocodile clip (20), only one blade end associated with only one of these two terminals is gripped.

8. Device according to Claim 7, **characterized in that** this wall or both these walls (43, 41) form part of the said receiving well (4).

9. Device according to Claim 7, **characterized in that** this wall or both these walls are protected by the said receiving well (4).

10. Device according to one of Claims 7 to 9,
**characterized in that** the cover (3) is provided with tabs (21, 22) for splaying the resilient connection contacts (10, 11) which are provided in this well (4), the splaying of these contacts (10, 11) establishing continuity of the telephone line, whereas this continuity is broken (d) when this cover (4) is open.

11. Device according to one of Claims 7 to 10,
**characterized in that** the said mechanical means for preventing any risk of accidentally establishing continuity consist of an additional thickness (19) of an insulating piece (9) for accommodating the contacts (10, 11) for respective connection between the input blades (53, 54) and the respectively associated output blades (51, 52).

12. Device according to Claim 11, **characterized in that** this insulating piece (9) for accommodating the connection contacts (10, 11) is positioned inside this well (4).

13. Device according to Claim 12, **characterized in that** the said insulating piece (9) constitutes the bottom of the well (4).

14. Break and test device according to one of Claims 1 to 6, **characterized in that** these free input terminals (53, 54) and output terminals (51, 52) each consist of a split metal contact (55) and in that the continuity of the line is established, upon closing the said cover (3), by two U-shaped pieces (56, 57) which are carried by this cover (3) and which, upon closing the said cover (3), are inserted into the respective slots (55) of these contacts in order thereby to establish the said continuity of the line.

15. Device according to Claim 14, **characterized in that** these split contacts (51 to 54) are flat and are held a certain distance away from the walls of the well (4), the said contacts being parallel to the said walls.
